# EUROPEAN PATENT APPLICATION

(11) **EP 4 425 611 A1**
(43) Date of publication of application: **04.09.2024**
(21) Application number: 22912022.5
(22) Date of filing: 23.12.2022
(51) Int. Cl.: H01M 4/38, H01M 4/36, H01M 10/052, H01M 10/625, H01M 10/627, H01M 4/02

(54) **POSITIVE ELECTRODE ACTIVE MATERIAL, AND POSITIVE ELECTRODE AND LITHIUM SECONDARY BATTERY COMPRISING SAME**

(30) Priority: 24.12.2021 KR 20210187147
(71) Applicant: LG Energy Solution, Ltd., Seoul 07335 (KR)
(72) Inventor: JO, Chi Ho, Daejeon 34122 (KR); JUNG, Wang Mo, Daejeon 34122 (KR); YOO, Tae Gu, Daejeon 34122 (KR); HWANG, Jin Tae, Daejeon 34122 (KR); JUNG, Hae Jung, Daejeon 34122 (KR); HEO, Jong Wook, Daejeon 34122 (KR); CHO, Hyeon Jin, Daejeon 34122 (KR)
(74) Representative: Hoffmann Eitle
(86) International application number: PCT/KR2022/021182
(87) International publication number: WO 2023/121389

(57) **Abstract**

The present invention relates to a positive electrode active material including a lithium composite transition metal oxide in the form of at least one of single particles or pseudo-single particles, wherein each single particle consists of one nodule, and each pseudo-single particle is a composite of 30 or fewer nodules, wherein the lithium composite transition metal oxide includes Ni, Co, Mn, and Al, wherein a molar ratio of the number of moles of Ni to the total number of moles of all metal elements except lithium is 0.83 to less than 1, a molar ratio of the number of moles of Co to the number of moles of Mn is 0.5 to less than 1, and a molar ratio ratio of the number of moles of Co to the number of moles of Al is 5 to 15.

## Description

### TECHNICAL FIELD

This application claims the priority of Korean Patent Application No. 10-2021-0187147 filed on December 24, 2021, in the Korean Intellectual Property Office, the disclosure of which is incorporated by reference herein.

The present invention relates to a positive electrode active material, and a positive electrode and a lithium secondary battery including the positive electrode active material, and more specifically, to a positive electrode active material in the form of at least one of a single particle or a pseudo-single particle, and a positive electrode and a lithium secondary battery including the positive electrode active material.

### BACKGROUND ART

A lithium secondary battery is generally composed of a positive electrode, a negative electrode, a separator, and an electrolyte, and the positive electrode and the negative electrode include active materials capable of intercalation and de-intercalation of lithium ions.

As a positive electrode active material of the lithium secondary battery, a lithium cobalt oxide (LiCoO₂), a lithium nickel oxide (LiNiO₂), a lithium manganese oxide (LiMnO₂, LiMnO₄, or the like), a lithium iron phosphate compound (LiFePO₄), and the like have been used. Among the above, the lithium cobalt oxide is advantageous in that the driving voltage is high and the capacity properties are excellent, but since the price of cobalt, which is a raw material, is high, and the supply thereof is unstable, so that it is difficult to commercially apply the lithium cobalt oxide to a large-capacity battery. The lithium nickel oxide has poor structural stability, so that it is difficult to implement sufficient lifespan properties. Meanwhile, the lithium manganese oxide has excellent stability, but has a problem in that the capacity properties thereof are poor. Therefore, in order to compensate for problems of lithium transition metal oxides including Ni, Co, or Mn alone, lithium composite transition metal oxides including two or more transition metals have been developed, and among them, a lithium nickel cobalt manganese oxide including Ni, Co, and Mn is widely used in the field of electric vehicle batteries.

A typical lithium nickel cobalt manganese oxide is generally in the form of a spherical secondary particle in which tens to hundreds of primary particles are aggregated. However, in the case of a lithium nickel cobalt manganese oxide in the form of a secondary particle in which a large number of primary particles are aggregated, particle breakage easily occurs wherein primary particles are broken off during a roll-pressing process when manufacturing a positive electrode, and there is a problem in that cracks are generated inside particles during a charging and discharging process. When particles of a positive electrode active material are broken or cracked, the contact area with an electrolyte solution increases, so that gas generation and active material deterioration caused by a side reaction with the electrolyte solution increase, resulting in a problem in that lifespan properties are degraded.

In addition, the demand for high-power and high-capacity batteries, such as batteries for electric vehicles, has been increasing in recent years, and accordingly, the nickel content in a positive electrode active material is gradually increasing. When the nickel content in the positive electrode active material increases, initial capacity properties are improved, but when charging and discharging are repeated, the structure of the positive electrode active material collapses due to the generation of a large amount of Ni⁺⁴ ions having high reactivity, which causes the deterioration rate of the positive electrode active material to increase, resulting in degraded lifespan properties and degraded battery safety.

### DISCLOSURE OF THE INVENTION

### TECHNICAL PROBLEM

The present invention is to solve the above problem and provides a positive electrode active material capable of suppressing particle breakage and crack generation in the process of manufacturing and charging/discharging of an electrode, and implementing excellent lifespan properties, while containing expensive cobalt in a small amount and a positive electrode and a lithium secondary battery including the positive electrode active material.

### TECHNICAL SOLUTION

According to an aspect of the present invention, there is provided a positive electrode active material including a lithium composite transition metal oxide in the form of at least one of single particles or pseudo-single particles, wherein each single particle consists of one nodule, and wherein pseudo-single particle is composite of 30 or fewer nodules, wherein the lithium composite transition metal oxide includes Ni, Co, Mn, and Al, wherein a molar ratio of the number of moles of Ni to the total number of moles of all metal elements except lithium in the lithium composite transition metal oxide is 0.83 to less than 1, a molar ratio (Co/Mn) of the number of moles of Co to the number of moles of Mn is 0.5 to less than 1, and a molar ratio (Co/Al) of the number of moles of Co to the number of moles of Al is 5 to 15, preferably 5 to 10. Specifically, the lithium composite transition metal oxide may have a molar ratio of the number of moles of Co to the total number of moles of all metals except lithium in the lithium composite transition metal oxide of greater than 0 to less than or equal to 0.1, preferably 0.01 to 0.1, more preferably 0.03 to 0.1, and yet more preferably 0.03 to 0.07, a molar ratio of the number of moles of Ni to the total number of moles of all metals except lithium in the lithium composite transition metal oxide of 0.83 to less than 1, preferably 0.83 to 0.95 or less, and more preferably 0.83 to 0.90, a molar ratio of the number of moles of Mn to the total number of moles of all metals except lithium in the lithium composite transition metal oxide of greater than 0 to less than 0.17, preferably 0.01 to less than 0.17, and more preferably 0.05 to 0.15, and a molar ratio of the number of moles of Al to the total number of moles of all metals except lithium in the lithium composite transition metal oxide of greater than 0 to 0.02 or less, preferably 0.001 to 0.02, and more preferably 0.003 to 0.01.

In addition, in the lithium composite transition metal oxide, a sum of the molar ratio of the number of moles of Co and the molar ratio of the number of moles of Al to the total number of moles of all metals except lithium in the lithium composite transition metal oxide may be less than 0.1, preferably 0.01 to less than 0.1, and more preferably 0.03 to 0.08.

Specifically, the lithium composite transition metal oxide may be represented by Formula 1 below.

[Formula 1] Li₁₊ₓNiₐCo_{b}Mn_{c}Al_{d}M¹ₑO₂

In Formula 1 above, M¹ is one or more selected from the group consisting of W, Zr, Y, Ba, Ca, Ti, Mg, Ta, and Nb, and 0≤x≤0.5, 0.83≤a<1, 0<b≤0.1, 0<c<0.17, 0<d≤0.02, 0≤e≤0.05, b<c, 0.5≤b/c<1, and 5≤b/d≤15.

Meanwhile, the lithium composite transition metal oxide may have an average particle diameter of nodules of 0.5 um to 3 µm, have an average particle diameter D₅₀ of 2 um to 6 um, and have an average crystallite size of 150 nm to 300 nm.

In addition, the positive electrode active material according to the present invention may further include, if necessary, a coating layer formed on the surface of the lithium composite transition metal oxide particle, and wherein the coating layer includes one or more selected from the group consisting of Al, Ti, W, B, F, P, Mg, Ni, Co, Fe, Cr, V, Cu, Ca, Zn, Zr, Nb, Mo, Sr, Sb, Bi, Si, and S.

Meanwhile, the positive electrode active material according to the present invention has a BET specific surface area of 0.1 to 1 m²/g, preferably 0.3 to 1 m²/g, and more preferably 0.5 to 1 m²/g.

In addition, the positive electrode active material may have a press density, measured after pressing a powder of the positive electrode active material according to the present invention at a pressure of 2000 kgf, of 2 to 4 g/cc, preferably 2.5 to 3.5 g/cc.

In addition, in a volume cumulative particle size distribution measured after pressing the powder of the positive electrode active material according to the present invention at a pressure of 9 tons, a volume ratio of particles having a particle diameter of 1 um or less may be 1 vol% or less, preferably 0.8 vol% or less, and more preferably 0.5 vol% or less.

According to another embodiment, the present invention provides a positive electrode including a positive electrode active material layer having a positive electrode active material according to the present invention.

According to yet another embodiment, the present invention provides a lithium secondary battery including the positive electrode according to the present invention.

### ADVANTAGEOUS EFFECTS

A positive electrode active material according to the present invention is in the form of at least one of single particles or pseudo-single particles with excellent particle strength, and thus, has less particle breakage or crack generation by roll-pressing during electrode manufacturing, and accordingly, there is less gas generation due to a side reaction with an electrolyte solution and less deterioration in the positive electrode active material, so that excellent lifespan properties and high-temperature properties may be implemented.

In addition, the positive electrode active material according to the present invention essentially includes Al, but the molar ratio of Co/Al and the molar ratio of Co/Mn are adjusted to satisfy specific ranges, so that even only a relatively small amount of Co is included, crack generation in the positive electrode active material is suppressed to the maximum. When the Co content in the positive electrode active material decreases, the diffusion resistance of Li ions increases, so that non-uniformity in lithium intercalation and de-intercalation occurs during charging and discharging, which intensifies the strain in the crystal structure, thereby generating cracks inside particles. However, when Al is included as an essential element as in the present invention, even when Co is included in a small number of moles, for example, less than 10 mol%, crystal structure strain may be minimized, and thus, deterioration of lifespan properties due to crack generation may be suppressed.

However, according to the studies of the present inventors, when the molar ratio of Co/Al and the molar ratio of Co/Mn are out of specific ranges, resistance increases, and capacity properties and lifespan properties are rather reduced. Therefore, in the present invention, Al is essentially included, but the molar ratio of Co/Al and the molar ratio of Co/Mn are adjusted to satisfy specific ranges, so that both lifespan properties and capacity properties are implemented to be excellent.

### BRIEF DESCRIPTION OF THE DRAWINGS

FIG. 1 is a graph showing a change in particle size distribution when the powder of the positive electrode active material of Example 1 is pressed at a pressure of 9 tons.
FIG. 2 is a graph showing a change in particle size distribution when the powder of the positive electrode active material of Comparative Example 4 is pressed at a pressure of 9 tons.

### DETAILED DESCRIPTION OF THE PREFERRED EMBODIMENT

Hereinafter, the present invention will be described in more detail.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

In the present invention, "single particle" is a particle consisting of a single nodule. A "nodule" according to the present disclosure may be a single crystal lacking any crystalline grain boundary, or alternatively may be a polycrystal in which grain boundaries do not appear when observed in a field of view of 5000x to 20000x using a scanning electron microscope (SEM). In the present disclosure, a "pseudo-single particle" refers to a particle which is a composite formed of 30 or less nodules.

In the present invention, a "secondary particle" refers to a particle formed by agglomeration of a plurality several tens to several hundreds of primary particles. More specifically, a secondary particle is an agglomerate of 50 primary particles or more.

In the present invention, when a "particle" is described, any one or all of a single particle, a pseudo-single particle, a primary particle, a nodule, and a secondary particle may be encompassed.

In the present invention, the term "average particle diameter D₅₀" refers to a particle size based on 50% of a volume cumulative particle size distribution of lithium composite transition metal oxide powder or positive electrode active material powder, and when a lithium composite transition metal oxide is a secondary particle, the average particle diameter refers to an average diameter of secondary particles, and when the lithium composite transition metal oxide is a combination of single particles and pseudo-single particles, the average particle diameter refers to an average diameter of a particle in the combination. The average particle diameter D₅₀ may be measured by a laser diffraction method. For example, lithium composite transition metal oxide powder or positive electrode active material powder is dispersed in a dispersion medium, and then introduced into a commercially available laser diffraction particle size measurement device (e.g., Microtrac MT 3000) to be irradiated with an ultrasonic wave of about 28 kHz to an output of 60W. Thereafter, the average particle diameter may be measured by obtaining a volume cumulative particle size distribution graph, and then obtaining a particle size corresponding to 50% of a volume cumulative amount.

In the present invention, the terms "crystallite" refers to particle units having substantially the same crystal orientation, and may be confirmed through Electron Backscatter Diffraction (EBSD) analysis. Specifically, the "crystallite" is the minimum particle unit displayed in the same color on an IPF map obtained by the EBSD analysis of a cross-section of a positive electrode active material cut through ion milling.

Meanwhile, in the present invention, the "average crystallite size" may be quantitatively analyzed using X-ray diffraction analysis (XRD) by Cu Kα X-rays. Specifically, particles to be measured are put into a holder, and the diffraction grating obtained from irradiating X-rays on the particles is analyzed to quantitatively analyze the average crystal size of crystal grains. Sampling was prepared by placing a powder sample of particles to be measured into a groove in the middle of a holder for regular powder, and leveling the surface of the sample using a slide glass, and making the height of the sample to be equal to the height of the edge of the holder. Next, using Bruker D8 Endeavor (light source: Cu-Kα, λ=1.54Å) equipped with a LynxEye XE-T-position sensitive detector, the X-ray diffraction analysis was performed for a FDS 0.5°and 2θ=15° to 90° region under the conditions of step size of 0.02° and total scan time of about 20 minutes. For the measured data, the Rietveld refinement was performed in consideration of charge (+3 for metal ions of transition metal sites, +2 for Ni ions of Li sites) and cation mixing at each site. For instrumental broadening at the time of the grain size analysis, Fundamental Parameter Approach (FPA) implemented in the Bruker TOPAS program was used, and when fitting, all the peaks in the measurement range were used. The peak shape was fitted using only Lorenzian contribution as the First Principle (FP) among peak types available in the TOPAS, and at this time, strain was not considered.

In the present invention, the "press density" was measured using HPRM-1000. Specifically, 5 g of positive electrode active material powder was introduced into a cylindrical mold, and then the mold containing the positive electrode active material was pressed with a force of 2000 kgf. Then, the height of the pressed mold was measured with a vernier caliper to obtain the press density.

In the present invention, the "specific surface area" is measured by a BET method, and specifically, may be calculated from the adsorption amount of nitrogen gas under a liquid nitrogen temperature (77K) using Belsorp-mino II of BEL Japan Co.

### Positive electrode active material

Hereinafter, a positive electrode active material according to the present invention will be described.

The positive electrode active material according to the present invention includes a lithium composite transition metal oxide in the form of at least one of single particles or pseudo-single particles, wherein each single particle consists of one nodule, wherein each pseudo-single particle is a composite of 30 or fewer nodules, wherein the lithium composite transition metal oxide includes Ni, Co, Mn, and Al. At this time, the lithium composite transition metal oxide has a molar ratio of a number of moles of Ni to a number of moles of all metal elements except lithium of 0.83 to less than 1, a molar ratio of the number of moles of Co to the total number of moles of Mn of 0.5 to less than 1, and a molar ratio of the number of moles of Co to the number of moles of Al of 5 to 15.

The positive electrode active material according to the present invention includes a lithium composite transition metal oxide in the form of at least one of single particles consisting of one nodule, or pseudo-single particles, which are composites of 30 or fewer, preferably 2 to 20, and more preferably 2 to 10 nodules.

The lithium composite transition metal oxide in the form of at least one of single particles or pseudo-single particles has higher particle strength than a typical lithium composite transition metal oxide in the form of a secondary particle in which tens to hundreds of primary particles are aggregated, and thus, there is less particle breakage during roll-pressing.

In addition, the lithium composite transition metal oxide in the form of at least one of single particles or pseudo-single particles according to the present invention has a small number of nodules constituting a particle, so that there is not much of a change due to volume expansion and contraction of the nodules during charging and discharging, and accordingly, the generation of cracks inside the particles is also significantly reduced.

Meanwhile, the lithium composite transition metal oxide includes Ni, Co, Mn, and Al, wherein the molar ratio of number of moles of Ni to the total number of moles of all metal elements except lithium is 0.83 to less than 1, preferably 0.83 to 0.95, more preferably 0.83 to 0.90, the molar ratio (Co/Mn) of the number of moles of Co to the number of moles of Mn is 0.5 to less than 1, preferably 0.5 to 0.8, and the molar ratio (Co/Al) of the number of moles of Co to the number of moles of Al is 5 to 15, preferably 5 to 10. When the composition of the lithium composite transition metal oxide satisfies the above conditions, even when Co is included in a small number of moles, for example, less than 10 mol%, crystal structure strain and crack generation may be effectively suppressed, so that excellent lifespan properties may be implemented, and excellent capacity properties and resistance properties may be exhibited.

A lithium composite transition metal oxide particle in the form of at least one of single particles or pseudo-single particles has a relatively large size of a nodule compared to a primary particle of a typical lithium composite transition metal oxide particle in the form of a secondary particle, and has fewer interfaces between the nodules which serve as a diffusion path for lithium ions, resulting in a decrease in lithium mobility, and since the lithium composite transition metal oxide particle in the form of at least one of single particles or a pseudo-single particles is produced at a relatively high firing temperature, a rock salt phase is formed on the surface of the particle, thereby increasing surface resistance. Accordingly, the lithium composite transition metal oxide particle in the form of at least one of single particles or a pseudo-single particles has problems of high lithium diffusion resistance, non-uniform lithium ion movement during charging and discharging, which causes crystal structure deformation and particle cracks caused thereby, and sharply degraded lifespan properties due to the particle cracks.

In addition, in general, manganese (Mn) is disadvantageous in forming a layered structure and serves to inhibit grain growth due to a high oxidation number, but cobalt (Co) is an element advantageous in forming a layered structure and serves to promote grain growth. Therefore, when the content of manganese (Mn) increases, it is difficult to achieve crystal grain growth during firing of the lithium composite transition metal oxide, so that it is difficult to form a single particle, and diffusion resistance of lithium ions increases, whereas when the content of cobalt (Co) increases, crystal grain grown is promoted, thereby facilitating the formation of a single particle, and a layered structure is smoothly formed, and the lithium ion diffusion resistance is reduced, so that crystal structure strain and particle cracks are suppressed to achieve an effect of improving lifespan properties.

For the above reason, in the prior art, it has been common that a single particle or a pseudo-single particle contains cobalt (Co) in a higher content than manganese (Mn). However, since cobalt is expensive and the supply thereof is unstable, the production cost of a positive electrode active material with a high cobalt content is high, resulting in poor price competitiveness, so that it is difficult to apply the positive electrode active material to large-capacity batteries such as batteries for electric vehicles.

Therefore, the present inventors have repeatedly conducted research to develop a positive electrode active material in the form of at least one of single particles or pseudo-single particle, the positive electrode active material including a small amount of Co but having excellent lifespan properties and resistance properties, and have found that the above-described objective may be achieved when a small amount of Al is included as an essential element together with Ni, Co, and Mn as transition metal elements, and when the molar ratio of Co/Mn and the molar ratio of Co/Al satisfy specific ranges, and completed the present invention.

Specifically, in the lithium composite transition metal oxide, the molar ratio of number of moles of Ni to total number of moles of all metals except lithium may be 0.83 to less than 1, preferably 0.83 to 0.95, more preferably 0.83 to 0.90. When the molar ratio of Ni in the lithium composite transition metal oxide satisfies the above range, high energy density may be implemented.

In addition, the lithium composite transition metal oxide may have a molar ratio (Co/Mn) of the number of moles of Co to the number of moles of Mn of 0.5 to less than 1, preferably 0.5 to 0.8. When the molar ratio of Co/Mn in the lithium composite transition metal oxide is less than 0.5, particles may notgrow uniformly, and when the molar ratio of Co/Mn is 1 or greater, there is no effect of reducing costs due to a Co content increase.

In addition, the lithium composite transition metal oxide may have a molar ratio (Co/Al) of the number of moles of Co to the number of moles of Al of 5 to 15, preferably 5 to 10. When the molar ratio of Co/Al is less than 5, resistance increases, capacity decreases, and cycle properties are degraded. In addition, when the molar ratio of Co/Al is greater than 15, the effect of suppressing crack generation is insignificant, so that the effect of improving lifespan properties is reduced.

Meanwhile, in the lithium composite transition metal oxide, the molar ratio of number of moles of Co to total number of moles of all metals except lithium may be greater than 0 to less than 0.1, preferably 0.01 to less than 0.1, more preferably 0.03 to 0.09, and yet more preferably 0.03 to 0.07, the molar ratio of Mn may be greater than 0 to less than 0.17, 0.01 to less than 0.17, preferably 0.05 to 0.15, and the molar ratio of Al may be greater than 0 to 0.02, preferably 0.001 to 0.02, and more preferably 0.003 to 0.01. When the molar ratios of Ni, Co, Mn, and Al in the lithium composite transition metal oxide satisfy the above ranges, high-temperature lifespan properties, rate properties, and resistance properties are particularly exhibited to be excellent.

Meanwhile, in the lithium composite transition metal oxide, the sum of the molar ratio of Co and the molar ratio of Al to all metals except lithium may be less than 0.12, preferably 0.01 to less than 0.12, and more preferably 0.03 to 0.08. When the sum of the molar ratio of Co and the molar ratio of Al is greater than 0.12, price competitiveness may be reduced, and lifespan properties and resistance properties may be degraded.

More specifically, the lithium composite transition metal oxide may be represented by Formula 1 below.

[Formula 1] Li₁₊ₓNiₐCo_{b}Mn_{c}Al_{d}M¹ₑO₂

In Formula 1 above, M¹ is one or more selected from the group consisting of Zr, W, Y, Ba, Ca, Ti, Mg, Ta, and Nb, and preferably, may be one or more selected from the group consisting of Zr, Y, Mg, and Ti, and more preferably, may be Zr, Y, or a combination thereof. An M¹ element is not necessarily included, but when included in an appropriate amount, the M¹ element may serve to promote particle growth during firing or improve crystal structure stability.

1+x represents the molar ratio of lithium in the lithium composite transition metal oxide, wherein the x may satisfy 0≤x≤0.5, 0≤x≤0.3, or 0≤x≤0.2.

a represents the molar ratio of number of moles of nickel to total number of moles of all metals except lithium in the lithium composite transition metal oxide, wherein the a may satisfy 0.83≤a<1, 0.83≤a≤0.95, or 0.83≤a≤0.90.

b represents the molar ratio of number of moles of cobalt to total number of moles of all metals except lithium in the lithium composite transition metal oxide, wherein the b may satisfy 0<b≤0.1, 0.01≤b≤0.1, or 0.03≤b≤0.09.

c represents the molar ratio of number of moles of manganese to total number of moles of all metals except lithium in the lithium composite transition metal oxide, wherein the c may satisfy 0<c<0.17, 0.01≤c<0.17, or 0.05≤c≤0.15.

Meanwhile, in the lithium composite transition metal oxide, c, the molar ratio of manganese, is greater than b, the molar ratio of cobalt. That is, b<c.

In addition, the ratio of the number of moles of cobalt to the number of moles of manganese, that is, b/c, satisfies 0.5≤b/c<1, or 0.5≤b/c≤0.8.

d represents the molar ratio of Al in all metals except lithium in the lithium composite transition metal oxide, wherein the d may satisfy 0<d≤0.02, 0.001≤d≤0.02, or 0.003≤d≤0.01.

In addition, the ratio of the number of moles of cobalt to the number of moles of aluminum, that is, b/d, may satisfy 5≤b/d≤15 or 5≤b/d≤10.

e represents the molar ratio of the M¹ element in all metals except lithium in the lithium composite transition metal oxide, wherein the e may satisfy 0≤e≤0.05, and 0≤e≤0.02, or 0≤e≤0.01.

Meanwhile, the lithium composite transition metal oxide may have an average particle diameter of nodules of 0.5 um to 3 um, preferably 0.8 um to 2.5 µm, and more preferably 0.8 um to 1.5 um. When the average particle diameter of nodules satisfies the above range, a positive electrode active material in the form of at least one of single particles or pseudo-single particles having excellent electrochemical properties may be formed. When the average particle diameter of nodules is too small, the number of aggregates of the nodules forming lithium composite transition metal oxide particles increases, so that the effect of suppressing the occurrence of particle breakage during roll-pressing is reduced, and when the average particle diameter of nodules is too large, a lithium diffusion path of a nodule becomes longer to increase resistance and degrade output properties.

Also, the lithium composite transition metal oxide may have an average particle diameter D₅₀ of 2 um to 6 um, preferably 2 um to 5 µm, and more preferably 3 um to 5 um. When the D₅₀ of the lithium composite transition metal oxide is too small, the specific surface area of an active material increases, which requires an increase in the amount of a conductive material, thereby reducing electrode density, and the solid content of an electrode slurry is lowered, so that productivity may be degraded when manufacturing, electrode and electrolyte solution wettability is lowered, thereby degrading electrochemical properties, and when the D₅₀ is too large, there is a problem in that resistance increases and output properties are degraded.

In addition, the lithium composite transition metal oxide may have an average crystallite size of 150 nm to 300 nm, 200 nm to 280 nm, or 230 nm to 280 nm. When the average crystallite size satisfies the above range, the generation of a rock salt phase is reduced when preparing a lithium composite transition metal oxide, so that a positive electrode active material in the form of at least one of single particles or pseudo-single particles having excellent resistance properties may be produced. In general, a positive electrode active material in the form of at least one of single particles or a pseudo-single particles is produced by increasing a firing temperature, thereby increasing the size of a nodule, but when only the size of the nodule is increased whereas the size of a crystallite remains small, there is a problem in that a rock salt phase is formed on the surface of the nodule, so that resistance increases. However, when the average crystallite size and the average particle diameter of the nodule are increased together, it is possible to obtain effects of minimizing the formation of a rock salt phase and suppressing the resistance increase.

Meanwhile, the positive electrode active material according to the present invention may further include, if necessary, a coating layer on the particle surface of the lithium composite transition metal oxide, the coating layer including one or more coating elements selected from the group consisting of Al, Ti, W, B, F, P, Mg, Ni, Co, Fe, Cr, V, Cu, Ca, Zn, Zr, Nb, Mo, Sr, Sb, Bi, Si, and S.

When the coating layer is present on the particle surface of the lithium composite transition metal oxide, the contact between an electrolyte and the lithium composite transition metal oxide is suppressed by the coating layer, so that the effect of reducing transition metal elution or gas generation due to a side reaction with the electrolyte may be obtained.

Preferably, the coating element may include Co. When a coating layer including Co is formed on the particle surface of the lithium composite transition metal oxide, it is possible to obtain an effect of improving output and reducing resistance together with an effect of suppressing side reactions with an electrolyte.

Meanwhile, the positive electrode active material according to the present invention has a BET specific surface area of 0.1 to 1 m²/g, preferably 0.3 to 1 m²/g, and more preferably 0.5 to 1 m²/g. When the BET specific surface area of the positive electrode active material is too small, a lithium movement path becomes longer to increase resistance and degrade discharge capacity, and when the BET specific surface area is too large, the content of a conductive material required when manufacturing an electrode increases to reduce electrode density and lower the solid content of an electrode slurry, so that productivity may be degraded when manufacturing the electrode.

In addition, the press density, measured after pressing the powder of the positive electrode active material according to the present invention at a pressure of 2000 kgf, may be 2 to 4 g/cc, preferably 2.5 to 3.5 g/cc. When the press density of the positive electrode active material powder satisfies the above range, an electrode having excellent energy density may be manufactured.

In addition, the positive electrode active material of the present invention includes a lithium composite transition metal oxide in the form of at least one of single particles or pseudo-single particles, and thus, has high particle strength compared to a typical positive electrode active material in the form of a secondary particle in which tens to hundreds of primary particles are aggregated, and has less fine powder generated due to particle breakage after roll-pressing. Specifically, in a volume cumulative particle size distribution measured after pressing the powder of the positive electrode active material according to the present invention at a pressure of 9 tons, the rate of particles having a particle diameter of 1 um or less may be 1 vol% or less, preferably 0.8 vol% or less, and more preferably 0.5 vol% or less. As described above, even when high pressure is applied thereto, the positive electrode active material of the present invention has less particle breakage and fine powder generation, and thus, may increase electrode density, and when an electrode and a battery are manufactured by applying the positive electrode active material of the present invention, gas generation and deterioration in lifespan due to particle breakage may be reduced to a minimum.

The positive electrode active material of the present as described above may be prepared by mixing a positive electrode active material precursor and a lithium raw material, and then firing the mixture.

At this time, the positive electrode active material precursor may be a commercially available positive electrode active material precursor purchased and used, or may be prepared according to a method for preparing a precursor known in the art.

For example, the precursor may be prepared by performing a co-precipitation reaction while introducing a transition metal aqueous solution, an ammonium cation complex forming agent, and a basic compound to a reactor, followed by stirring the mixture.

The transition metal aqueous solution may be prepared by dissolving a transition metal-containing raw material in a solvent such as water, and for example, may be prepared by dissolving a nickel-containing raw material, a cobalt-containing raw material, and a manganese-containing raw material in water. In addition, if necessary, the transition metal aqueous solution may further include an aluminum-containing raw material.

Meanwhile, the transition metal-containing raw material may be an acetate, a carbonate, a nitrate, a sulfate, a halide, a sulfide, an oxide, or the like of a transition metal.

Specifically, the nickel-containing raw material may be, for example, NiO, NiCO₃·2Ni(OH)₂·4H₂O, NiC₂O₂·2H₂O, Ni(NO₃)₂·6H₂O, NiSO_{4,} NiSO₄·6H₂O, a nickel halide, or a combination thereof.

The cobalt-containing raw material may be, for example, CoSO₄ Co(OCOCH₃)₂·4H₂O, Co(NO₃)₂·6H₂O, CoSO₄·7H₂O, or a combination thereof.

The manganese-containing raw material may be, for example, Mn₂O₃, MnO₂, Mn₃O₄, MnCO₃, Mn(NO₃)₂, MnSO₄ ·H₂O, a manganese acetate, a manganese halide, or a combination thereof.

The aluminum-containing raw material may be, for example, Al₂O₃, Al(OH)₃, Al(NO₃)₃, Al₂(SO₄)₃, (HO)₂AlCH₃CO₂, HOAl(CH₃CO₂)₂, Al(CH₃CO₂)₃, an aluminum halide, or a combination thereof. However, in the case of Al, the Al is not added to a transition metal aqueous solution, and may be introduced together with a lithium raw material in a firing step to be described later.

At this time, the input amount of each transition metal-containing raw material may be determined in consideration of the molar ratio of a transition metal in a positive electrode active material to be finally produced. For example, in the present invention, each transition metal-containing raw material may be introduced such that the molar ratio of number of moles of nickel to total number of moles of all metals included in the transition metal aqueous solution is 0.83 or greater, the molar ratio of number of moles of cobalt to number of moles of manganese is 0.5 to less than 1, and the molar ratio of number of moles of cobalt to number of moles of aluminum is 5 to 15.

Meanwhile, the ammonium cation complex forming agent may include at least one compound selected from the group consisting of NH₄OH, (NH₄)₂SO₄, NH₄NO₃, NH₄Cl, CH₃COONH₄, and (NH₄)₂CO₃, and the compound may be introduced into a reactor in the form of a solution in which the compound is dissolved in a solvent. At this time, the solvent may be water, or a mixture of an organic solvent (for example, an alcohol, etc.) which may be uniformly mixed with water and water.

The basic compound may be at least one compound selected from the group consisting of NaOH, KOH, and Ca(OH)₂, and the compound may be introduced into a reactor in the form of a solution in which the compound is dissolved in a solvent. At this time, as a solvent, water, or a mixture of an organic solvent (for example, alcohol, etc.) which may be uniformly mixed with water and water may be used.

When the transition metal aqueous solution, the ammonium cation complex forming agent, and the basic compound are introduced into a reactor and stirred as described above, transition metals in the transition metal aqueous solution are co-precipitated to generate precursor particles in the form of transition metal hydroxides.

At this time, the transition metal aqueous solution, the ammonium cation complex forming agent, and the basic compound are introduced in an amount such that the pH of a reaction solution is within a desired range.

When the precursor particles are formed by the method described above, a positive electrode active material precursor is separated from the reaction solution to obtain the positive electrode active material precursor. For example, a positive electrode active material precursor is separated from the reaction solution by filtering the reaction solution, and then the separated positive electrode active material precursor may be washed with water and dried to obtain the positive electrode active material precursor. At this time, if necessary, a process such as pulverization and/or classification may be performed.

Next, the positive electrode active material precursor and a lithium raw material are mixed and the mixture is fired to prepare a lithium composite transition metal oxide. At this time, if necessary, the aluminum-containing raw material and/or an M¹ metal-containing raw material may be mixed together and fired.

As the lithium raw material, a lithium-containing sulfate, nitrate, acetate, carbonate, oxalate, citrate, halide, hydroxide, or oxyhydroxide may be used, and for example, Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a mixture thereof may be used.

Meanwhile, the lithium raw material and the positive electrode active material precursor may be mixed such that the molar ratio of Li : all metals in the precursor is 1 : 1 to 1.2 : 1, preferably 1 : 1 to 1.1 : 1, and more preferably 1 : 1 to 1.06 : 1. When the mixing ratio of the lithium raw material and the metals in the positive electrode active material precursor satisfies the above range, a layered crystal structure of a positive electrode active material is well developed, so that the positive electrode active material having excellent capacity properties and structural stability may be produced.

Meanwhile, the firing is performed at a temperature at which a single particle or a pseudo-single particle may be formed. In order to form a single particle or a pseudo-single particle, firing should be performed at a temperature higher than the temperature at which a typical lithium composite transition metal oxide in the form of a secondary particle is prepared, and for example, when the precursor composition is the same, the firing should be performed at a temperature about 30°C to 100°C higher than the temperature at which the typical lithium composite transition metal oxide in the form of a secondary particle is prepared. The firing temperature for the formation of a single particle or a pseudo-single particle may vary depending on a metal composition in a precursor. For example, a high-Ni NCM-based lithium composite transition metal oxide having a nickel (Ni) content of 80 mol% or greater is formed as a single particle or a pseudo-single particle, the firing temperature may be about 700°C to 1000°C, preferably 800°C to 950°C. When the firing temperature satisfies the above range, a positive electrode active material in the form of at least one of single particles or pseudo-single particles having excellent electrochemical properties may be prepared. When the firing temperature is lower than 790°C, a positive electrode active material in the form of a secondary particle is prepared, and when higher than 950°C, due to excessive firing, a layered crystal structure is not formed properly, so that the electrochemical properties are degraded.

In addition, the firing may be performed under an oxygen atmosphere for 5 hours to 35 hours. In the present specification, the oxygen atmosphere means an atmosphere in which oxygen in an amount sufficient for firing is included, including an atmospheric atmosphere. Particularly, it is preferable that the firing is performed in an atmosphere in which the oxygen partial pressure is higher than that of the atmospheric atmosphere.

Meanwhile, in the case of producing a positive electrode active material in which a coating layer formed, after the firing, a step of mixing a lithium composite transition metal oxide prepared through the firing and a coating raw material, and then heat treating the mixture may be further performed. At this time, the mixing may be performed by solid-phase mixing or liquid-phase mixing, and the heat treatment may be performed at a suitable temperature depending on the coating raw material. For example, the heat treatment of the coating process may be performed at a temperature of 200°C to 700°C, or 300°C to 600°C, but is not limited thereto.

In addition, when producing the positive electrode active material of the present invention, it is preferable that a process of washing with water is not performed after the firing. Typically, when preparing a high-Ni NCM-based lithium composite transition metal oxide having a nickel (Ni) content of 83 mol% or greater, it has been common to perform a process of washing with water after firing in order to reduce the content of lithium by-products. However, according to the studies of the present inventors, when a process of washing with water is performed when preparing a lithium composite transition metal oxide in the form of a single particle or a pseudo-single particle, the surface properties of the lithium composite transition metal oxide are degraded during the process of washing with water, so that resistance increases. Therefore, when producing the positive electrode active material of the present invention, it is preferable that residual lithium on the surface of the lithium composite transition metal oxide is consumed through a process of forming a coating layer without performing a process of washing with water. As described above, when the positive electrode active material is produced without washing the lithium composite transition metal oxide with water, it is possible to suppress resistance increase caused by surface defects.

### Positive electrode

Next, a positive electrode according to the present invention will be described.

The positive electrode according to the present invention includes a positive electrode active material layer having the positive electrode active material in the form of a single particle or a pseudo-single particle according to the present invention. Specifically, the positive electrode includes a positive electrode current collector and a positive electrode active material layer formed on the positive electrode current collector and including the positive electrode active material.

In the positive electrode, the positive electrode current collector is not particularly limited as long as it has conductivity without causing a chemical change in a battery. For example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3-500 µm, and microscopic irregularities may be formed on the surface of the positive electrode current collector to improve the adhesion of the positive electrode active material. For example, the positive electrode current collector may be used in various forms such as a film, a sheet, a foil, a net, a porous body, a foam, and a non-woven body.

In addition, the positive electrode active material layer may include a conductive material and a binder, together with the positive electrode active material described above.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fiber, and a carbon nanotube; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be typically included in an amount of 1 to 30 wt%, preferably 1 to 20 wt%, and more preferably 1 to 10 wt% based on the total weight of a positive electrode active material layer.

The binder serves to improve the bonding between positive electrode active material particles and the adhesion between a positive electrode active material and a positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used. The binder may be included in an amount of 1 to 30 wt%, preferably 1 to 20 wt%, and more preferably 1 to 10 wt% based on the total weight of the positive electrode active material layer.

The positive electrode may be manufactured according to a typical method for manufacturing a positive electrode. For example, the positive electrode may be manufactured by mixing a positive electrode active material, a binder, and/or a conductive material in a solvent to prepare a positive electrode slurry, and applying the positive electrode slurry on a positive electrode current collector, followed by drying and roll-pressing. At this time, the type and content of the positive electrode active material, the binder, and the conductive material are as described above.

The solvent may be a solvent commonly used in the art, and may be dimethyl sulfoxide (DMSO), isopropyl alcohol, N-methylpyrrolidone (NMP), acetone, water, or the like. Any one thereof or a mixture of two or more thereof may be used. The solvent may be used in an amount sufficient to dissolve or disperse the positive electrode active material, the conductive material, and the binder in consideration of the application thickness and preparation yield of the slurry, and to allow the slurry to have a viscosity which may exhibit excellent thickness uniformity when applied for the manufacturing of a positive electrode layer.

In another method, the positive electrode may be manufactured by casting the positive electrode slurry on a separate support and then laminating a film peeled off from the support on a positive electrode current collector.

### Lithium secondary battery

Next a lithium secondary battery according to the present invention will be described.

The lithium secondary battery of the present invention includes the positive electrode according to of the present invention. Specifically, the lithium secondary battery includes a positive electrode, a negative electrode positioned opposing the positive electrode, a separator interposed between the positive electrode and the negative electrode, and an electrolyte, wherein the positive electrode is the same as described above. Also, the lithium secondary battery may selectively further include a battery case for accommodating an electrode assembly composed of the positive electrode, the negative electrode, and the separator, and a sealing member for sealing the battery case.

In the lithium secondary battery, the negative electrode includes a negative electrode current collector and a negative electrode active material layer disposed on the negative electrode current collector.

The negative electrode current collector is not particularly limited as long as it has a high conductivity without causing a chemical change in a battery. For example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, the negative electrode current collector may typically have a thickness of 3-500 µm, and as in the case of the positive electrode current collector, microscopic irregularities may be formed on the surface of the negative electrode current collector to improve the adhesion of a negative electrode active material. For example, the negative electrode current collector may be used in various forms such as a film, a sheet, a foil, a net, a porous body, a foam, a non-woven body, and the like.

The negative electrode active material layer selectively includes a binder and a conductive material in addition to the negative electrode active material.

As the negative electrode active material, a compound capable of reversible intercalation and de-intercalation of lithium may be used. Specific examples of the negative electrode active material may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as SiO_{β}(0<β< 2), SnO₂, a vanadium oxide, and a lithium vanadium oxide; or a composite including the metallic compound and the carbonaceous material such as an Si-C composite or an Sn-C composite, and any one thereof or a mixture of two or more thereof may be used.

Also, a metal lithium thin film may be used as the negative electrode active material. Furthermore, low crystalline carbon, high crystalline carbon and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, liquid crystal a pitch-based carbon fiber(mesophase pitch-based carbon fiber), meso-carbon microbeads, mesophase pitches, and high-temperature sintered carbon such as petroleum or coal tar pitch derived cokes.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fiber, and a carbon nanotube; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be typically included in an amount of 1 to 30 wt%, preferably 1 to 20 wt%, and more preferably 1 to 10 wt% based on the total weight of a negative electrode active material layer.

The binder serves to improve the bonding between negative electrode active material particles and the adhesion between the negative electrode active material and the negative electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-- butadiene rubber (SBR), fluorine rubber, or various copolymers thereof, and any one thereof or a mixture of two or more thereof may be used. The binder may be included in an amount of 1 to 30 wt%, preferably 1 to 20 wt%, and more preferably 1 to 10 wt% based on the total weight of the negative electrode active material layer.

As an example, the negative electrode active material layer may be prepared by applying a negative electrode slurry including a negative electrode active material, and selectively a binder and a conductive material on a negative electrode current collector, following by drying, or may be prepared by casting the negative electrode slurry on a separate support, and then laminating a film peeled off from the support on a negative electrode current collector.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Furthermore, a coated separator including a ceramic component or a polymer material may be used to secure heat resistance or mechanical strength, and may selectively be used in a single-layered or multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the electrolyte may include an organic solvent and a lithium salt.

Any organic solvent may be used as the organic solvent without particular limitation as long as it may serve as a medium through which ions involved in an electrochemical reaction of the battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among the above solvents, a carbonate-based solvent is preferable, and a mixture of a cyclic carbonate (e.g., ethylene carbonate or propylene carbonate) having high ionic conductivity and high dielectric constant, which may increase charging/discharging performance of the battery, and a low-viscosity linear carbonate-based compound (e.g., ethylmethyl carbonate, dimethyl carbonate, or diethyl carbonate) is more preferable.

Any compound may be used as the lithium salt without particular limitation as long as it may provide lithium ions used in a lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 to 5.0 M, preferably 0.1 M to 3.0 M. When the concentration of the lithium salt is in the above range, the electrolyte has suitable conductivity and viscosity, thereby exhibiting excellent performance, and lithium ions may effectively move.

For purposes of improving the lifespan properties of a battery, suppressing the reduction in battery capacity, improving the discharge capacity of the battery, and the like, the electrolyte may additionally include an additive in addition to the above electrolyte components. For example, as the additive, a haloalkylene carbonate-based compound such as difluoroethylene carbonate or the like, pyridine, triethylphosphite, triethanolamine, cyclic ether, ethylene diamine, n-glyme, hexamethylphosphate triamide, a nitrobenzene derivative, sulfur, a quinone imine dye, N-substituted oxazolidinone, N,N-substituted imidazolidine, ethylene glycol dialkyl ether, ammonium salt, pyrrole, 2-methoxy ethanol, aluminum trichloride, or the like may be used alone or in combination, but the additive is not limited thereto. The additive may be included in an amount of 0.1 to 10 wt%, Preferably 0.1 to 5 wt% based on the total weight of the electrolyte.

The lithium secondary battery including the positive electrode active material according to the present invention as describe above stably exhibits excellent discharging capacity, output properties, and capacity retention rate, and thus, are useful for portable devices such as a mobile phone, a notebook computer, and a digital camera, and in the field of electric cars such as a hybrid electric vehicle (HEV).

Accordingly, according to another embodiment of the present invention, a battery module including the lithium secondary battery as a unit cell, and a battery pack including the battery module are provided.

The battery module or the battery pack may be used as a power source of one or more medium-and-large-sized devices such as a power tool, an electric car such as an electric vehicle (EV), a hybrid electric vehicle (HEV), and a plug-in hybrid electric vehicle (PHEV), and a power storage system.

Hereinafter, embodiments of the present invention will be described in detail so that those skilled in the art may easily carry out the present invention. However, the present invention may be embodied in many different forms, and is not limited to the embodiments set forth herein.

### Example 1

To a co-precipitation reactor (capacity 20 L), 4 liters of distilled water was added, and while maintaining the temperature of 50°C, 100 mL of an ammonia aqueous solution with a 28 wt% concentration was introduced there. Then, to the co-precipitation reactor, a transition metal solution in which NiSO_{4,} CoSO₄, and MnSO₄ were mixed such that the molar ratio of nickel:cobalt:manganese was 87 : 5 : 8, an ammonia aqueous solution, and a sodium hydroxide solution were added, and the mixture was subjected to a co-precipitation reaction to form a precursor. The precursor was separated, washed, and then dried in an oven at 130°C to prepare a precursor.

The precursor synthesized as described above, LiOH, and aluminum hydroxide were mixed such that the molar ratio of Ni+Co+Mn : Al : Li was 99 : 1: 1.05, and then the mixture was heat treated for 12 hours at 850°C under an oxygen atmosphere to prepare a lithium composite transition metal oxide Li[Ni_{0.86}Co_{0.05}Mn_{0.08}Al_{0.01}]O₂. The prepared lithium composite transition metal oxide was in the form of single particles and/or pseudo-single particles, and the average particle diameter of nodules was 2 µm, D50 of the lithium composite transition metal oxide was 4.13 um, and the average crystallite size was 280 nm.

### Example 2

A lithium composite transition metal oxide Li[Ni_{0.86}Co_{0.06}Mn_{0.07}Al_{0.01}]O₂ was prepared in the same manner as in Example 1 except that a transition metal solution, in which NiSO₄, CoSO₄, and MnSO₄ were mixed such that the molar ratio of nickel:cobalt:manganese was 87 : 6 : 7, was used. The prepared lithium composite transition metal oxide was in the form of single particles and/or pseudo-single particles, and the average particle diameter of nodules was 2 µm, D50 of the lithium composite transition metal oxide was 4.1 um, and the average crystallite size was 270 nm.

### Example 3

A lithium composite transition metal oxide Li[Ni_{0.83}Co_{0.06}Mn_{0.10}Al_{0.01}]O₂ was prepared in the same manner as in Example 1 except that a transition metal solution, in which NiSO₄, CoSO₄, and MnSO₄ were mixed such that the molar ratio of nickel:cobalt:manganese was 84 : 6 : 10, was used. The prepared lithium composite transition metal oxide was in the form of single particles and/or pseudo-single particles, and the average particle diameter of nodules was 2.1 µm, D50 of the lithium composite transition metal oxide was 4 um, and the average crystallite size was 280 nm.

### Example 4

A lithium composite transition metal oxide Li[Ni_{0.865}Co_{0.05}Mn_{0.08}Al_{0.005}]O₂ was prepared in the same manner as in Example 1 except that a precursor, LiOH, and aluminum hydroxide were mixed such that the molar ratio of Ni+Co+Mn : Al : Li was 99.5 : 0.5: 1.05 and used. The prepared lithium composite transition metal oxide was in the form of single particles and/or pseudo-single particles, and the average particle diameter of nodules was 2 µm, D50 of the lithium composite transition metal oxide was 4 um, and the average crystallite size was 270 nm.

### Comparative Example 1

To a co-precipitation reactor (capacity 20 L), 4 liters of distilled water was added, and while maintaining the temperature of 50°C, 100 mL of an ammonia aqueous solution with a 28 wt% concentration was introduced there. Then, to the co-precipitation reactor, a transition metal solution in which NiSO_{4,} CoSO₄, and MnSO₄ were mixed such that the molar ratio of nickel:cobalt:manganese was 87 : 5 : 8, an ammonia aqueous solution, and a sodium hydroxide solution were added, and the mixture was subjected to a co-precipitation reaction to form a precursor. The precursor was separated, washed, and then dried in an oven at 130°C to prepare a precursor.

The precursor synthesized as described above and LiOH were mixed such that the molar ratio of Ni+Co+Mn : Li was 1 : 1.05, and then the mixture was heat treated for 12 hours at 850°C under an oxygen atmosphere to prepare a lithium composite transition metal oxide Li[Ni_{0.87}Co_{0.05}Mn_{0.08}]O₂. The prepared lithium composite transition metal oxide was in the form of single particles and/or pseudo-single particles, and the average particle diameter of nodules was 2 um, D50 of the lithium composite transition metal oxide was 4.1 um, and the average crystallite size was 280 nm.

### Comparative Example 2

A lithium composite transition metal oxide Li[Ni_{0.83}Co_{0.10}Mn_{0.06}Al_{0.01}]O₂ was prepared in the same manner as in Example 1 except that a transition metal solution, in which NiSO₄, CoSO₄, and MnSO₄ were mixed such that the molar ratio of nickel:cobalt:manganese was 84 : 10 : 6, was used. The prepared lithium composite transition metal oxide was in the form of single particles and/or pseudo-single particles, and the average particle diameter of nodules was 2 um, D50 of the lithium composite transition metal oxide was 4.2 um, and the average crystallite size was 270 nm.

### Comparative Example 3

A lithium composite transition metal oxide Li[Ni_{0.86}Co_{0.03}Mn_{0.10}Al_{0.01}]O₂ was prepared in the same manner as in Example 1 except that a transition metal solution, in which NiSO₄, CoSO₄, and MnSO₄ were mixed such that the molar ratio of nickel:cobalt:manganese was 87 : 3 : 10, was used. The prepared lithium composite transition metal oxide was in the form of single particles and/or a pseudo-single particles, and the average particle diameter of nodules was 1.8 µm, D50 of the lithium composite transition metal oxide was 3.9 um, and the average crystallite size was 260 nm.

### Comparative Example 4

A precursor synthesized by a co-precipitation reaction, LiOH, and aluminum hydroxide were mixed such that the molar ratio of Ni+Co+Mn : Al : Li was 99 : 1: 1.05, and then the mixture was heat treated for 12 hours at 760°C under an oxygen atmosphere to prepare a lithium composite transition metal oxide Li[Ni_{0.86}Co_{0.05}Mn_{0.08}Al_{0.01}]O₂. The prepared lithium composite transition metal oxide was in the form of secondary particles, and the average particle diameter of primary particles was 0.2 um, the average particle diameter of secondary particles was 4 um, and the average crystallite size was 120 nm.

### Comparative Example 5

A lithium composite transition metal oxide Li[Ni_{0.81}Co_{0.08}Mn_{0.09}Al_{0.02}]O₂ was prepared in the same manner as in Example 1 except that a transition metal solution, in which NiSO₄, CoSO₄, and MnSO₄ were mixed such that the molar ratio of nickel:cobalt:manganese was 83 : 8 : 9, was used, and that a precursor synthesized by the co-precipitation reaction, LiOH, and aluminum hydroxide were mixed such that the molar ratio of Ni+Co+Mn : Al : Li was 98 : 2: 1.05. The prepared lithium composite transition metal oxide was in the form of single particles and/or pseudo-single particles, and the average particle diameter of nodules was 2 um, D50 of the lithium composite transition metal oxide was 4 um, and the average crystallite size was 270 nm.

### Comparative Example 6

A lithium composite transition metal oxide Li[Ni_{0.825}Co_{0.08}Mn_{0.09}Al_{0.005}]O₂ was prepared in the same manner as in Example 1 except that a transition metal solution, in which NiSO₄, CoSO₄, and MnSO₄ were mixed such that the molar ratio of nickel:cobalt:manganese was 83 : 8 : 9, was used, and that a precursor synthesized by the co-precipitation reaction, LiOH, and aluminum hydroxide were mixed such that the molar ratio of Ni+Co+Mn : Al : Li was 99.5 : 0.5 : 1.05. The prepared lithium composite transition metal oxide was in the form of single particles and/or pseudo-single particles, and the average particle diameter of nodules was 2 um, the average particle diameter of D50 of the lithium composite transition metal oxide was 4 um, and the average crystallite size was 270 nm.

**[Table 1]**

| | Composition | Ni molar ratio | Co/Mn | Co/A l | Particle shape |
|---|---|---|---|---|---|
| Example 1 | Li[Ni_{0.86}Co_{0.05}M n_{0.08}Al_{0.01}]O₂ | 0.86 | 0.625 | 5 | Single particle |
| Example 2 | Li[Ni_{0.86}Co_{0.06}M n_{0.07}Al_{0.01}]O₂ | 0.86 | 0.857 | 6 | Single particle |
| Example 3 | Li[Ni_{0.83}Co_{0.06}M n_{0.10}Al_{0.01}]O₂ | 0.83 | 0.6 | 6 | Single particle |
| Example 4 | Li[Ni_{0.865}Co_{0.05}M n_{0.08}Al_{0.005}]O₂ | 0.865 | 0.625 | 10 | Single particle |
| Comparative Example 1 | Li[Ni_{0.87}Co_{0.05}M n_{0.08}]O₂ | 0.87 | 0.625 | 0 | Single particle |
| Comparative Example 2 | Li[Ni_{0.83}Co_{0.10}M n_{0.06}Al_{0.01}]O₂ | 0.83 | 1.7 | 10 | Single particle |
| Comparative Example 3 | Li[Ni_{0.86}Co_{0.03}M n_{0.10}Al_{0.01}]O₂ | 0.86 | 0.3 | 3 | Single particle |
| Comparative Example 4 | Li[Ni_{0.86}Co_{0.05}M n_{0.08}Al_{0.01}]O₂ | 0.86 | 0.625 | 5 | Secondary particle |
| Comparative Example 5 | Li[Ni_{0.81}Co_{0.08}M n_{0.09}Al_{0.02}]O₂ | 0.81 | 0.89 | 4 | Single particle |
| Comparative Example 6 | Li[Ni_{0.825}Co_{0.08}M n_{0.09}Al_{0.005}]O₂ | 0.825 | 0.89 | 16 | Single particle |

### Experimental Example 1: Evaluation of particle breakage

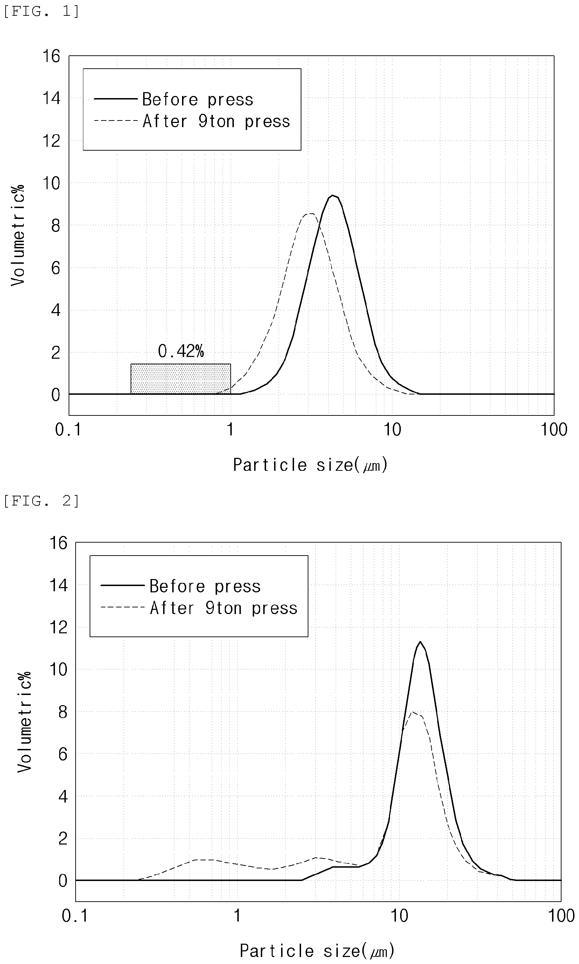

The powder of the positive electrode active material produced in each of Examples 1 to 4 and Comparative Examples 1 to 6 was placed in a cylindrical metal mold having a diameter of 2 cm and the powder was pressed at a pressure of 9 tons, and then the volume cumulative particle size distribution (PSD) was measured to measure the generation rate of fine powder of less than 1 um. The particle size distribution was measured using Microtrac's S-3500, and based on the total weight of the positive electrode active material, the generation rate of fine powder having a particle diameter of 1 um or less was converted to wt%, and the measurement results are shown in Table 2 below. In addition, FIG. 1 and FIG. 2 respectively shows the particle size distribution before and after the pressing of the powder of the positive active material produced in each of Example 1 and Comparative Example 4.

**[Table 2]**

| | Generation rate of fine powder (%) |
|---|---|
| Example 1 | 0.42 |
| Example 2 | 0.48 |
| Example 3 | 0.45 |
| Example 4 | 0.45 |
| Comparative Example 1 | 0.44 |
| Comparative Example 2 | 0.46 |
| Comparative Example 3 | 0.47 |
| Comparative Example 4 | 15.2 |
| Comparative Example 5 | 0.48 |
| Comparative Example 6 | 0.49 |

Through Table 2 above, it can be confirmed that the fine powder generation rate after roll-pressing the positive electrode active material in the form of a single particle is significantly lower than that of the positive electrode active material in the form of a secondary particle (Comparative Example 4). Therefore, when the positive electrode active material in the form of a single particle is used, it is possible to significantly reduce gas generation and electrolyte solution side reactions due to fine powder.

### <Manufacturing of secondary battery>

The positive electrode active material produced in each of Examples 1 to 4 and Comparative Examples 1 to 6, Super P, and a PVdF binder were mixed at a weight ratio of 95 : 2 : 3 in N-methylpyrrolidone to prepare a positive electrode slurry. The positive electrode slurry was applied on one surface of an aluminum current collector, dried at 130°C, and then roll-pressed to manufacture a positive electrode.

Graphite as a negative electrode active material, Super C as a conductive material, and SBR/CMC as a binder were mixed at a weight ratio of 96:1:3 to prepare a negative electrode slurry, and the negative electrode slurry was applied on one surface of a copper current collector, dried at 130°C, and then roll-pressed to manufacture a negative electrode.

A separator was interposed between the positive electrode and the negative electrode to manufacture an electrode assembly, and the electrode assembly was placed inside a battery case, followed by injecting an electrolyte solution into the case to manufacture a lithium secondary battery. The electrolyte solution was prepared by dissolving LiPF₆ with a 1 M concentration in a mixed organic solvent in which ethylene carbonate/dimethyl carbonate/diethyl carbonate were mixed in a volume ratio of 1:2:1, and then adding 2 wt% of vinylene carbonate (VC) thereto.

After injection of the electrolyte solution, charging until 4.25V at 0.1C in CC-CV mode, and discharging to 2.5V at 0.1C in CC mode at 25 °C to perform an activation process.

### Experimental Example 2: High-temperature lifespan evaluation

Each of the lithium secondary batteries of Example 1 ~ 3 and Comparative Example 1 ~ 4, which are manufactured above, was charged to 4.25 V with 1 C in a CC-CV mode at 45°C, and discharged to 2.5 V with a constant current of 0.5 C, which was set to one cycle, and then 50 cycles of the charging and discharging were performed to measure a capacity retention rate so as to evaluate lifespan properties. The measurement results are shown in Table 3 below.

### Experimental Example 3: Evaluation of capacity and resistance properties

Each of the lithium secondary batteries manufactured above was charged and discharged once at 2.5 V to 4.25 V under the condition of 0.1 C/0.1 C, and then the initial discharge capacity (unit: mAh) and the resistance (unit: Q) were measured. At this time, the resistance was measured through changes in the voltage when a current of 2.5 C was applied for 10 seconds. The measurement results are shown in Table 3 below.

**[Table 3]**

| | Capacity retention rate (%) | Initial discharge capacity (mAh/g) | Resistance (Ω) |
|---|---|---|---|
| Example 1 | 94.0 | 206.2 | 9.8 |
| Example 2 | 93.9 | 205.8 | 9.7 |
| Example 3 | 94.1 | 205.4 | 9.6 |
| Example 4 | 92.2 | 205.2 | 9.9 |
| Comparative | 90.1 | 204.5 | 11.2 |
| Example 1 | | | |
| Comparative Example 2 | 91.0 | 205.5 | 10.1 |
| Comparative Example 3 | 88.0 | 204.6 | 10.5 |
| Comparative Example 4 | 86.0 | 205.5 | 10.5 |
| Comparative Example 5 | 93.1 | 202.1 | 10.8 |
| Comparative Example 6 | 93.5 | 203.5 | 10.9 |

Through Table 3, it can be confirmed that the lithium secondary batteries to which the positive electrode active materials of Examples 1~4 which satisfy the composition of the present invention are applied have excellent high-temperature lifespan properties, capacity properties, and resistance properties compared to the lithium secondary batteries to which the positive electrode active materials of Comparative Examples 1~ 6 are applied.

## Claims

1. A positive electrode active material, comprising:
a lithium composite transition metal oxide in the form of at least one of single particles or pseudo-single particles,
wherein each single particle consists of one nodule,
wherein each pseudo-single particle is a composite of 30 or fewer nodules,
wherein the lithium composite transition metal oxide includes Ni, Co, Mn, and Al, wherein a molar ratio of the number of moles of Ni to the total number of moles of all metal elements except lithium in the lithium composite transition metal oxide is 0.83 to less than 1, a molar ratio of the number of moles of Co to the number of moles of Mn is 0.5 to less than 1, and a molar ratio of the number of moles of Co to the number of moles of Al is 5 to 15.

2. The positive electrode active material of claim 1, wherein a molar ratio of the number of moles of Co to the total number of moles of all metal elements except lithium in the lithium composite transition metal oxide is greater than 0 and less than or equal to 0.1.

3. The positive electrode active material of claim 1, wherein a molar ratio of the number of moles of Al to the total number of moles of all metals except lithium in the lithium composite transition metal oxide is greater than 0 and less than or equal to 0.02.

4. The positive electrode active material of claim 1, wherein a molar ratio of the number of moles of Mn to the total number of moles of all metals except lithium in the lithium composite transition metal oxide is greater than 0 and less than 0.17.

5. The positive electrode active material of claim 1, wherein a molar ratio of the number of a sum of moles of Co and the number of moles of Al to the total number of moles of all metals except lithium in the lithium composite transition metal oxide is less than 0.1.

6. The positive electrode active material of claim 1, wherein the lithium composite transition metal oxide is represented by Formula 1 below:
[Formula 1] Li₁₊ₓNiₐCo_{b}Mn_{c}Al_{d}M¹ₑO₂
wherein in Formula 1 above,
M¹ is one or more selected from the group consisting of W, Zr, Y, Ba, Ca, Ti, Mg, Ta, and Nb, and
0≤x≤0.5, 0.83≤a<1, 0<b≤0.1, 0<c<0.17, 0<d≤0.02, 0≤e≤0.05, b<c, 0.5≤b/c<1, and 5≤b/d≤10.

7. The positive electrode active material of claim 1, wherein the nodules have an average particle diameter of 0.5 um to 3 um.

8. The positive electrode active material of claim 1, wherein the lithium composite transition metal oxide has an average particle diameter D₅₀ of 2 um to 6 um.

9. The positive electrode active material of claim 1, wherein the lithium composite transition metal oxide has an average crystallite size of 150 nm to 300 nm.

10. The positive electrode active material of claim 1, further comprising:
a coating layer formed on the particle surface of the lithium composite transition metal oxide,
wherein the coating layer includes one or more coating elements selected from the group consisting of Al, Ti, W, B, F, P, Mg, Ni, Co, Fe, Cr, V, Cu, Ca, Zn, Zr, Nb, Mo, Sr, Sb, Bi, Si, and S.

11. The positive electrode active material of claim 1, wherein the positive electrode active material has a BET specific surface area of 0.1 m²/g to 1 m²/g.

12. The positive electrode active material of claim 1, wherein the positive electrode active material has a press density of 2 to 4 g/cc, wherein the press density is measured after pressing a powder of the positive electrode active material at a pressure of 2000 kgf.

13. The positive electrode active material of claim 1, wherein the positive electrode active material has a volume ratio of particles having a particle diameter of less than 1 um of 1 vol% or less in a volume cumulative particle size distribution measured after pressing a powder of the positive electrode active material at a pressure of 9 tons is 1 vol% or less.

14. A positive electrode comprising a positive electrode active material layer including the positive electrode active material of any one of claims 1 to 13.

15. A lithium secondary battery comprising the positive electrode of claim 14.
